# FASCICULE DE BREVET EUROPEEN

(11) **EP 2 752 065 B1**
(45) Date de publication et mention de la délivrance du brevet: **07.12.2016**
(21) Numéro de dépôt: 12762344.5
(22) Date de dépôt: 31.08.2012
(51) Int. Cl.: H04W 72/04, H04W 84/12, H04W 88/08, H04W 92/20

(54) **SELECTION DE CANAL WIFI**
WIFI-KANALAUSWAHL
WIFI CHANNEL SELECTION

(30) Priorité: 02.09.2011 FR 1157812
(43) Date de publication de la demande: 09.07.2014
(73) Titulaire: Orange, 75015 Paris (FR)
(72) Inventeur: CARIOU, Laurent, F-35000 Rennes (FR); BERNARD, David, F-35560 Marcille Raoul (FR)
(86) Numéro de dépôt international: PCT/FR2012/051962
(87) Numéro de publication internationale: WO 2013/030514

(56) Documents cités:
- WO-A1-2011/083875
- US-A1- 2008 096 573
- US-A1- 2010 202 391
- Yuichi Morioka, Sony Corporation: "802.11ad New Technique Proposal", doc: IEEE 802.11-10/0259r02 , 15 mars 2010 (2010-03-15), XP002672258, Extrait de l'Internet: URL:http://www.google.nl/url?sa=t&rct=j&q= 802.11%2010(0259r02&source=web&cd=1&ved=0C CYQFjAA&url=https%3A%2F%2Fmentor.ieee.org% 2F802.11%2Fdcn%2F10%2F11-10-0259-02-00ad-1 1ad-new-technique-sony.ppt&ei=YIlsT8mrMYKd 0AXwxsniBg&usg=AFQjCNFHNTydMi8SjIc1k1Nbqdl p8oljUA&cad=rja [extrait le 2012-03-23]

## Description

### Domaine de l'invention

La présente invention se rapporte au domaine des télécommunications. Au sein de ce domaine, l'invention se rapporte plus particulièrement au domaine des communications par voie radio, également appelées sans fil, qui inclue les réseaux WiFi (Wireless Fidelity selon la terminologie anglo saxonne) dont la standardisation fait l'objet des normes 802.11 et suivantes de l'IEEE. Ces normes garantissent une interopérabilité entre des équipements de communication sans fil conformes à ces normes.

Dans la suite du document, l'appellation WiFi doit être comprise comme couvrant le domaine des communications par voie radio.

L'invention est décrite dans un contexte d'un réseau WiFi à infrastructure dans lequel plusieurs points d'accès (Access Point selon la terminologie anglo saxonne) cohabitent et permettent à des stations d'établir des communications par exemple avec un terminal ou avec un serveur distant.

Plus précisément, l'invention concerne l'occupation fréquentielle des bandes radio dédiées aux équipements WiFi, notamment la bande autour de 5GHz définie dans le standard IEEE802.11n et la bande autour de 868,8 MHz définie dans le standard IEEE802.11ah, et se rapporte plus particulièrement à un mécanisme de sélection de canal radio parmi les différents canaux radio pouvant être utilisés dans un système WiFi lorsque les équipements WiFi sont équipés d'interfaces radio multiples leur permettant d'émettre des trames de données ou de signalisation dans au moins deux bandes de fréquence différentes. Les canaux radio de tels équipements sont dits multi bandes.

On entend ici par équipement WiFi un appareil appartenant à un ensemble de services de base (selon la terminologie anglo saxonne BSS pour « basic service set ») formé par un point d'accès et les stations associées à ce point d'accès, c'est-à-dire les stations situées dans la zone de couverture radio de ce point d'accès. L'invention se place dans un contexte où les équipements peuvent appartenir à des ensembles de services de base différents.

### Art antérieur

US2010/202391 A1 décrit un réseau de communication, par exemple WiFi, dans lequel les points d'accès peuvent communiquer entre eux via une interface sans fil pour échanger des messages de gestion d'interférence de points d'accès voisins.

Lorsqu'un équipement WiFi a des données à transmettre, il doit accéder au canal de transmission. Compte tenu que l'équipement WiFi est multi bande et que chaque bande comprend généralement plusieurs canaux, l'accès au canal de transmission nécessite que le canal soit préalablement sélectionné. Les mécanismes de sélection de canal existants correspondent soit à un mode centralisé, soit à un mode décentralisé.

Selon le mode centralisé, un contrôleur force chaque point d'accès à choisir un canal en fonction d'un plan de fréquence bien défini.

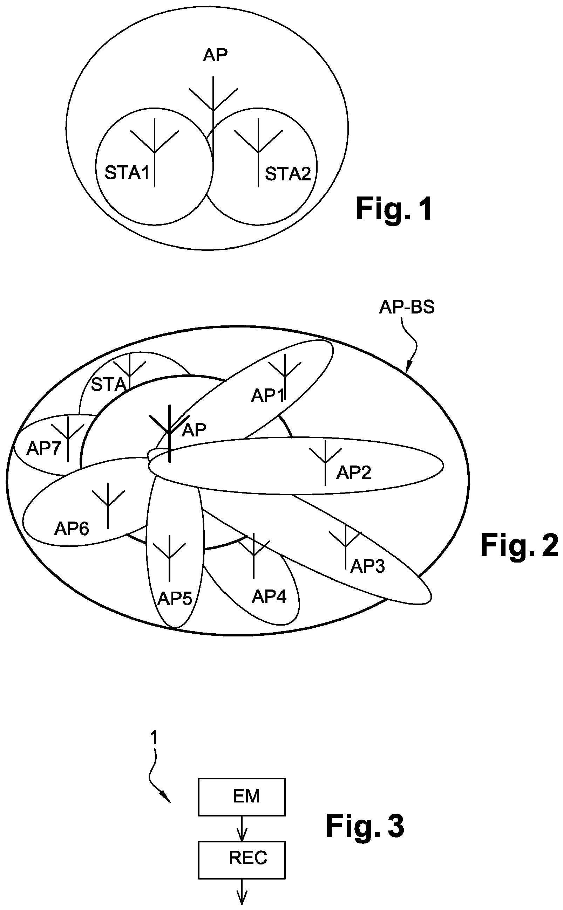

Selon le mode décentralisé, un point d'accès Wi-Fi sélectionne un canal en fonction d'informations pertinentes dont il dispose telles que le taux d'occupation du canal, le niveau de bruit. Pour disposer d'informations pertinentes pour la sélection, le point d'accès peut :
- effectuer un scan passif au moyen d'une écoute des émissions ou effectuer un scan actif au moyen d'un échange de trames «probe request/response », sur l'ensemble de la bande pour l'ensemble des canaux de transmission, afin de récupérer l'occupation d'un canal sur les différents canaux scannés. Cette information d'occupation peut-être obtenue par une mesure de longue durée grâce au mécanisme CCA (clear channel assessment) qui permet de calculer le temps pendant lequel le canal est occupé et le temps pendant lequel le canal est libre. Cette mesure peut toutefois être perturbée par des équipements cachés, c'est-à-dire des stations ou des points d'accès qui peuvent émettre sans être "entendus" par d'autres stations ou d'autres points d'accès. En référence à la figure 1, lorsque deux stations STA1 et STA2 se trouvent de part et d'autre d'un point d'accès AP et suffisamment éloignées l'une de l'autre pour ne pas détecter la transmission émanant de l'autre station ; on parle de stations cachées. Dans ce cas la station STA1, respectivement la station STA2, considère le canal comme libre et accède au canal alors que la station cachée STA2, respectivement STA1, peut occuper le canal.
- décoder uniquement la balise beacon envoyée par les points d'accès voisins dans laquelle l'information de charge (« BSS load » défini dans le standard IEEE 802.11k) est transmise, cette information de charge fournissant l'occupation du canal de transmission sur les canaux concernés. Cette information peut également être perturbée par des équipements cachés.

La récupération des informations pertinentes pour la sélection de canal par les méthodes connues précédemment décrites nécessite le scan d'au moins un canal de transmission autre que le canal de transmission courant utilisé par le point d'accès. Par conséquent, le point d'accès doit stopper son écoute ou ses transmissions sur son canal courant actif pour changer de canal avant de pouvoir effectuer le scan. Une telle contrainte peut-être pénalisante notamment dans le cas où une sélection de canal est requise pour pallier une surcharge de trafic.

### 3. Exposé de l'invention

L'invention propose une solution nouvelle avantageuse, sous la forme d'un procédé de sélection de canal destiné à un réseau WiFi avec partage d'un canal multi bandes entre équipements, une première bande étant dite de transmission, une deuxième bande étant dite de signalisation et de couverture radio plus large que la bande de transmission, qui soit plus efficace que les procédés connus.

Ainsi, l'invention a pour objet un procédé de sélection de canal destiné à un équipement WiFi multi bandes d'un réseau WiFi avec partage de canaux multi bandes entre équipements du réseau WiFi, une première bande étant dite de transmission, une deuxième bande étant dite de signalisation et de couverture radio plus large que la bande de transmission. Le procédé comprend :
- une étape d'émission dans la bande de signalisation de premières informations pertinentes reliées à l'occupation de la bande de transmission par l'équipement et
- une étape de réception dans la bande de signalisation de deuxièmes informations pertinentes reliées à l'occupation de la bande de transmission par des équipements voisins qui se déroulent de manière concomitante à toute étape d'émission dans la bande de transmission.

La bande de signalisation étant commune aux différents équipements WiFi, points d'accès, stations du réseau WiFi, chaque équipement peut ainsi récupérer les informations pertinentes reliées à l'occupation de la bande de transmission par les équipements WiFi qui lui sont voisins sans pour autant interrompre une transmission se déroulant dans la bande de transmission. Le fait que la couverture de la bande de signalisation soit plus large que la couverture de la bande de transmission permet de résoudre le problème des équipements cachés associés à la bande de transmission ou tout au moins de réduire notablement le nombre d'équipements cachés en fonction du choix de la bande de signalisation par rapport à la bande de transmission.

Typiquement, le réseau WiFi multi bandes est tel qu'une première bande présente de meilleures caractéristiques pour la transmission de données (meilleur débit, ...) et qu'une deuxième bande présente de meilleures caractéristiques de portée (à bas débit, ...). La première bande est alors considérée comme la bande de transmission de donnée et la deuxième bande comme la bande de signalisation.

Pour exemple, le réseau WiFi est un réseau d'accès WiFi avec une bande de transmission qui correspond à une bande de 5GHz en référence à un réseau conforme au standard IEEE802.11n et avec une bande de signalisation qui correspond à une bande 868-868,6MHz en référence à un réseau conforme au standard IEEE802.11ah. Le réseau WiFi comprend au moins deux points d'accès AP multi bandes (5GHz + 868MHz) et une ou plusieurs stations. Le standard IEEE802.11ad définit un mode multi-bande qui est applicable à tous les systèmes WIFI (11a,b,g,n,ac,ad,af,ah, ...) même si sa définition n'intervient que dans ce standard avec des bandes spécifiques. Compte tenu de la différence de fréquences centrales entre les bandes de transmission et de signalisation, la couverture de la bande de signalisation est notablement plus large que celle de la bande de transmission. Pour la diffusion des informations pertinentes au sein du réseau d'accès WiFi, les points d'accès multi bandes du réseau WiFi partagent un même canal de la bande de signalisation lorsque celle-ci comporte plusieurs canaux.

Les informations pertinentes reliées à l'occupation de la bande de transmission par un équipement WiFi fournissent par exemple l'identification des canaux utilisés par l'équipement WiFi dans la bande de transmission.

Pour exemple, les standards IEEE802.11n et IEEE802.11ac prévoient des transmissions multi canaux : deux canaux pour des transmissions à 40MHz, quatre canaux pour des transmissions à 80MHz, huit canaux pour des transmissions à 80+80MHz ou à 160MHz. Les informations pertinentes peuvent par ailleurs ou en outre concerner la charge ou l'occupation du ou des canaux dans la bande de transmission par ce point d'accès et éventuellement par les stations avec lesquelles il est en communication. L'occupation du canal est souvent déterminée en calculant le rapport entre le temps utilisé pour les transmissions et le temps pendant lequel le canal est libre (duty cycle). Plusieurs métriques sont définies dans les standards IEEE 802.11 : « BSS load » (IEEE 802.11n) qui correspond à la définition précédente, « Qload » (IEEE 802.11aa) qui rajoute des informations plus précises sur les types de trafic sur le canal et « extended BSS load » (IEEE 802.11ac) qui étend la définition en prenant en compte les transmissions MU-MIMO (abréviation de « Multi Users - Multiple Input Multiple Outpout » qui correspond à la possibilité de transmettre simultanément vers plusieurs utilisateurs dans un système à plusieurs antennes d'émission) et en prenant en compte les modes de transmission à 40MHz, 80MHz, 80+80MHz et 160MHz. Pour chacun de ces modes, il existe une métrique qui permet de calculer l'occupation du canal dans chaque canal utilisé par le point d'accès.

Les informations pertinentes peuvent par ailleurs ou en outre être reliées aux besoins en bande passante de l'équipement.

Pour exemple, les informations peuvent être reliées à la bande passante équivalente c'est-à-dire à la bande théorique dont l'équipement dispose 100% du temps.

Les informations pertinentes peuvent en outre être reliées à une information de localisation, ou à une information sur les autres équipements vus c'est-à-dire dans la couverture radio de l'équipement. En particulier dans ce dernier cas, lorsque des équipements voisins, points d'accès, stations, ne possèdent pas la fonctionnalité multi bande et ne peuvent pas transmettre d'information pertinente dans la bande de signalisation, les informations pertinentes peuvent être reliées aux canaux utilisés par ces équipements et à leur charge. Ces informations doivent dans ce cas être obtenues par un scan dans la bande de transmission de données.

Les premières et deuxièmes informations pertinentes sont reliées à des informations de même nature ou de nature différente.

Ainsi, un équipement donné et les équipements voisins, c'est-à-dire dans la même zone de couverture de la bande de signalisation, utilisent un canal dans la bande de transmission déterminé par la mise en oeuvre par chaque équipement d'un procédé de sélection de canal selon l'invention. Les équipements peuvent ne pas être sur le même canal dans la bande de transmission de données mais peuvent recevoir les informations pertinentes des autres équipements via la bande de signalisation commune. La connaissance par les équipements d'informations sur l'occupation de la bande de transmission permet avantageusement de prendre en compte cette occupation lors de la sélection de canal selon l'invention ce qui permet de limiter le partage de canal entre équipements voisins.

Selon un mode de réalisation de l'invention, l'émission des premières informations pertinentes est effectuée selon un mode de diffusion.

Un mode de diffusion est avantageux en ce qu'il ne nécessite aucun échange de signalisation entre équipements pour l'obtention des informations d'occupation des canaux de transmission.

Selon un mode de réalisation de l'invention, les informations pertinentes sont encapsulées dans une trame comportant des champs renseignés en vue d'un transfert de session d'un premier canal à un deuxième canal du réseau WiFi multi bandes.

Le premier canal est différent du deuxième canal. Le premier canal et le deuxième canal peuvent appartenir à des sous bandes contigües ou disjointes de la bande de transmission.

Ce mode de réalisation est plus particulièrement adapté à des réseaux WiFi conformes au standard IEEE802.11ad dans lequel est défini un mode multi bande. Toutefois, ce mode est applicable à tous les systèmes Wi-Fi (IEEE802.11a,b,g,n,ac,ad,af,ah, ... ) même si ce mode est défini dans une bande fréquentielle particulière. Ce mode est utilisé lorsqu'un équipement possède deux interfaces Wi-Fi opérant dans deux bandes différentes. Le texte provisoire du standard IEEE802.11ad détermine l'élément multi bandes « multi-band élément » qui peut être transmis dans les balises « beacons », dans les trames d'associations « associations request /response » ou dans les trames de sondage « probe request/response ». L'élément multi bandes « multi-band élément » diffuse les capacités « capabilities » des équipements possédant la fonction multi-bande. Selon le standard IEEE802.11ad, cet élément est diffusé dans une des bandes de transmission et signale l'existence de l'autre bande de transmission. Notamment le champ « band ID » permet de définir de quelle autre bande il s'agit et le champ « multi-band STA capability » définit le rôle joué par cet équipement dans cette autre bande (point d'accès AP, station STA ou autre). Cet élément multi bandes sert en particulier à un transfert de session « Fast Session Transfer » du premier canal au deuxième canal lorsque la première bande n'assure pas l'acheminement des données de manière satisfaisante, par exemple en cas de saturation. L'enrichissement de cet élément avec les informations pertinentes sur l'occupation des canaux est particulièrement avantageux pour éviter de sélectionner un canal déjà chargé voire à la limite de la saturation. Selon l'invention, une des bandes est considérée comme la bande de signalisation, l'élément est diffusé dans cette bande et le transfert de session intervient entre sous bandes de la bande de transmission.

Selon un mode de réalisation de l'invention, le procédé comprend en outre :
- une étape d'échange de trames dans la bande de signalisation entre l'équipement et un équipement voisin, l'équipement émettant une trame de requête de changement de canal et attendant en réponse une trame émanant de l'équipement voisin indiquant l'acceptation ou le rejet de changement de canal.

Ce mode est particulièrement avantageux dans le cas où il existe suffisamment de canaux libres pour les besoins de l'équipement mais où ces canaux sont disjoints alors que l'équipement a besoin de canaux adjacents. Par exemple, l'équipement a besoin de 80MHz contigus mais les informations pertinentes relatives à l'occupation indiquent que seuls deux canaux de 40MHz disjoints sont libres.

Selon ce mode de réalisation, l'équipement lance une procédure de négociation avec un équipement pour que celui-ci change de canal et libère un canal adjacent à un canal libre.

La négociation s'effectue par un échange de trames entre équipements dans la bande de signalisation : une trame de requête de changement de canal (« channel switch request ») et une trame de réponse à cette requête (« channel switch response »).

La trame de requête peut incorporer les éléments suivants :
- un identifiant de la bande de transmission concernée par la requête,
- un identifiant de l'équipement devant bénéficier du changement de canal,
- un identifiant de l'équipement émettant la requête de changement de canal (cet identifiant est différent du précédent dans le cas où le bénéficiaire du changement n'a pas d'interfaces WiFi multi bandes et où l'équipement émetteur de la requête gère le changement pour son compte),
- un indice des canaux libres pour le changement de canal,
- un identifiant d'un canal ou de plusieurs canaux sur lesquels l'équipement destinataire de la requête peut se décaler tout en satisfaisant ses besoins de bande passante (sous réserve que ses besoins en bande passante soient remontés dans l'élément multiband element).

La trame de réponse peut incorporer les éléments suivants :
- un identifiant de la bande de transmission concernée par la requête,
- un identifiant de l'équipement devant bénéficier du changement de canal,
- un identifiant de l'équipement émettant la requête de changement de canal,
- l'acceptation du changement de canal ou le rejet du changement de canal,
- en cas d'acceptation, l'indication du canal de destination,
- en cas d'acceptation, l'indication du délai avant le changement de canal.

L'invention a en outre pour objet équipement WiFi multi bandes. L'équipement WiFi est plus particulièrement destiné à un réseau d'accès WiFi multi bandes comprenant plusieurs points d'accès multi bandes, une première bande étant dite de transmission, une deuxième bande étant dite de signalisation et de couverture plus large que la bande de transmission.

Un équipement WiFi selon l'invention comprend :
- des moyens d'émission/réception pour émettre et recevoir des trames de données via un canal multi bande de la bande de transmission,
- des moyens d'émission/réception adaptés pour émettre et recevoir dans la bande de signalisation des trames de signalisation comportant des informations pertinentes reliées à l'occupation de la bande de transmission respectivement par l'équipement et des équipement voisins,
   les moyens d'émission/réception respectivement des bandes de transmission et de signalisation étant adaptés conjointement pour émettre et recevoir de manière simultanée.

Un tel équipement WiFi est notamment adapté pour mettre en oeuvre le procédé de sélection de canal selon l'invention décrit précédemment. Il s'agit par exemple d'un point d'accès ou d'une station Wifi.

Selon un mode de réalisation de l'invention, l'équipement WiFi est tel que les moyens d'émission/réception dans la bande de signalisation comprennent des moyens de diffusion.

Selon une implémentation préférée, les étapes du procédé de sélection de canal selon l'invention sont déterminées par les instructions d'un programme sous forme d'un ou plusieurs modules incorporés respectivement dans des circuits électroniques telles des puces elles-mêmes pouvant être disposées dans un dispositif électronique tel un équipement WiFi. Le procédé de sélection de canal, selon l'invention peut tout aussi bien être mis en oeuvre lorsque ce programme (ou ses modules) est chargé dans un organe de calcul tel un processeur ou équivalent dont le fonctionnement est alors commandé par l'exécution du programme.

En conséquence, l'invention s'applique également à un programme d'ordinateur (ou ses différents modules), notamment un programme d'ordinateur sur ou dans un support d'informations, adapté à mettre en oeuvre l'invention. Ce programme peut utiliser n'importe quel langage de programmation, et être sous la forme de code source, code objet, ou de code intermédiaire entre code source et code objet tel que dans une forme partiellement compilée, ou dans n'importe quelle autre forme souhaitable pour implémenter un procédé selon l'invention.

Le support d'informations peut être n'importe quelle entité ou dispositif capable de stocker le programme. Par exemple, le support peut comporter un moyen de stockage, tel qu'une RAM, une ROM, par exemple un CD ROM ou une ROM de circuit microélectronique, ou encore un moyen d'enregistrement magnétique, par exemple un disque dur, ou encore une EPROM installée dans une clé USB.

Alternativement, le support d'informations peut être un circuit intégré dans lequel le programme est incorporé, le circuit étant adapté pour exécuter ou pour être utilisé dans l'exécution du procédé en question.

D'autre part, le programme peut être traduit en une forme transmissible telle qu'un signal électrique ou optique, qui peut être acheminé via un câble électrique ou optique, par radio ou par d'autres moyens. Le programme selon l'invention peut être en particulier téléchargé sur un réseau de type Internet.

Donc, l'invention a en outre pour objet un programme d'ordinateur sur un support d'informations. Le programme comporte des instructions de programme adaptées à la mise en oeuvre d'un procédé de sélection de canal mis en oeuvre par un équipement WiFi multi bandes destiné à un réseau d'accès WiFi multi bandes, selon l'un des objets de l'invention, lorsque ledit programme est chargé et exécuté dans l'équipement WiFi destiné à mettre en oeuvre le procédé de sélection de canal.

L'invention a en outre pour objet un support d'informations comportant des instructions de programme adaptées à la mise en oeuvre d'un procédé de sélection de canal mis en oeuvre par un équipement WiFi multi bandes destiné à un réseau d'accès WiFi multi bandes, selon l'un des objets de l'invention, lorsque ledit programme est chargé et exécuté dans l'équipement WiFi destiné à mettre en oeuvre le procédé de sélection de canal.

### Liste des figures

D'autres caractéristiques et avantages de l'invention apparaîtront plus clairement à la lecture de la description suivante de modes de réalisation particuliers, donnés à titre de simples exemples illustratifs et non limitatifs, et des dessins annexés, parmi lesquels :
- la figure 1 est un schéma illustrant une infrastructure BSS (basic service set) de stations STA1, STA2 d'un système radio sans fil comprenant un point d'accès PA, la station STA2 étant cachée de la station STA1, décrite en regard de l'art antérieur ;
- la figure 2 est un schéma illustrant un réseau d'accès WiFi multi bande comprenant huit points d'accès et un terminal ;
- la figure 3 est un organigramme des principales étapes du procédé de sélection de canal selon l'invention ;
- la figure 4 est une représentation selon l'axe fréquentiel d'un taux d'occupation des canaux de la bande de transmission par les points d'accès voisins du point d'accès AP ;
- la figure 5 est une représentation selon l'axe fréquentiel d'un taux d'occupation des canaux de la bande de transmission par les points d'accès voisins du point d'accès AP avec une fenêtre matérialisant les canaux sélectionnés par le point d'accès AP lors de la mise en oeuvre d'un procédé selon l'invention, selon l'exemple illustré l'occupation de la bande est compatible du besoin de deux canaux libres adjacents du point d'accès ;
- la figure 6 est une représentation selon l'axe fréquentiel d'un taux d'occupation des canaux de la bande de transmission par les points d'accès voisins du point d'accès AP avec une fenêtre matérialisant les canaux sélectionnés par le point d'accès AP lors de la mise en oeuvre d'un procédé selon l'invention, selon l'exemple illustré l'occupation de la bande n'est pas totalement compatible du besoin de quatre canaux libres adjacents du point d'accès ;
- la figure 7 est une illustration de la mise en oeuvre d'une négociation entre le point d'accès AP et le point d'accès AP2 pour que celui-ci change de canal et libère le canal qu'il occupe et qui est adjacent au groupe de trois canaux libres, suite au constat par le point d'accès que l'occupation de la bande n'est pas compatible de ses besoins comme illustré par la figure 6 ;
- la figure 8 est un schéma d'un exemple de structure simplifiée d'un équipement WiFi apte à mettre en oeuvre un procédé de sélection de canal selon l'invention.

### Description d'un mode de réalisation de l'invention

Le réseau de communication WiFi considéré illustré par la figure 2 comprend neuf équipements WiFi dont au moins huit AP, AP1-AP7 assurent en particulier une fonctionnalité de point d'accès. Ces derniers équipements sont désignés ultérieurement par les termes «point d'accès », AP, ils peuvent correspondre à une passerelle ou à un relais. L'équipement STA est plus particulièrement un terminal. Les équipements WiFi sont équipés d'interfaces radio multiples leur permettant d'émettre des trames dans au moins deux bandes de fréquence.

L'invention est décrite dans le contexte d'un réseau WiFi avec une bande de transmission qui correspond à une bande de 5GHz en référence à un réseau conforme au standard IEEE802.11n et avec une bande de signalisation qui correspond à une bande 868-868,6MHz en référence à un réseau conforme au standard IEEE802.11ah.

L'invention entreprend une diffusion d'informations dans la bande de signalisation entre équipements WiFi (AP et STA) partageant la même bande de transmission pour améliorer l'occupation du spectre radio de cette dernière bande.

Selon l'illustration de la figure 2, la portée radio de la bande de signalisation BS du point d'accès AP couvre tous les points d'accès AP1-AP7 ainsi que le terminal STA. Toutes les autres formes plus ou moins elliptiques représentent la couverture radio dans la bande de transmission de chacun des équipements.

Le standard IEEE802.11ad définit un mode multi-bande qui est applicable à tous les systèmes WIFI (11a,b,g,n,ac,ad,af,ah, ...) même si sa définition n'intervient que dans ce standard avec des bandes spécifiques.

Ce mode est utilisé lorsqu'un équipement possède deux modules WiFi opérant dans deux bandes différentes.

La figure 3 est un organigramme des principales étapes du procédé de sélection de canal selon l'invention mis en oeuvre par le point d'accès AP.

Le procédé 1 comprend une étape EM d'émission dans la bande de signalisation de premières informations pertinentes reliées à l'occupation de la bande de transmission par le point d'accès AP.

Le procédé 1 comprend une étape REC de réception dans la bande de signalisation de deuxièmes informations pertinentes reliées à l'occupation de la bande de transmission par des points d'accès voisins.

L'étape EM d'émission et l'étape REC de réception se déroulent de manière concomitante à toute étape d'émission du point d'accès AP dans la bande de transmission.

Selon un mode de réalisation, l'émission des premières informations pertinentes est effectuée selon un mode de diffusion par le point d'accès AP.

Selon un mode de réalisation, les informations pertinentes sont encapsulées dans une trame comportant des champs renseignés en vue d'un transfert de session d'un premier canal à un deuxième canal du réseau WiFi multi bandes.

Le texte issu du standard IEEE802.11ad dans sa version provisoire décrit l'élément « Multi-band element » dont le contenu est reproduit ci-après dans le tableau 1.

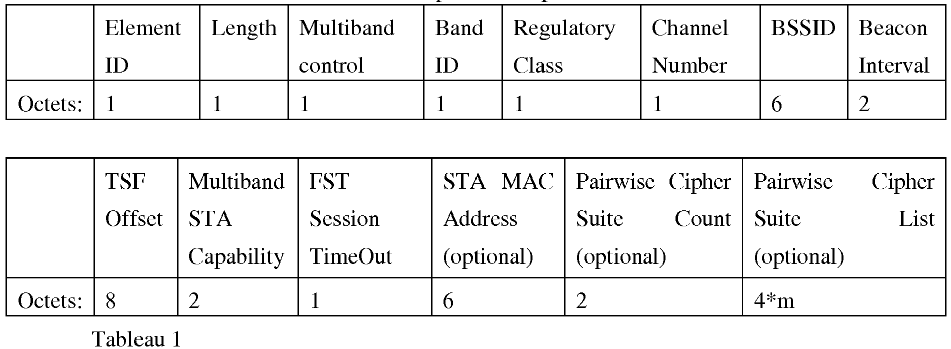

Cet élément donne des indications sur les capacités (« comptabilities ») des équipements possédant la fonction multi bandes. Diffusé dans une des bandes, il permet de signaler l'existence de l'autre bande et de l'identifier au moyen notamment du champ « band ID ». Le champ « multi-band STA capability » définit en particulier le rôle joué par cet équipement dans cette autre bande : point d'accès (AP) ou terminal (STA). Il peut être transmis avec les balises (« beacons »), avec les requêtes/réponses d'association (« association request/response »), avec les requêtes/réponses de sondage (« probe request/response »).

Selon un mode de réalisation, l'élément « Multi-band élément » est enrichi des informations pertinentes. Cet élément est encapsulé dans une trame diffusée par les points d'accès AP, AP1-AP7 dans la bande de signalisation.

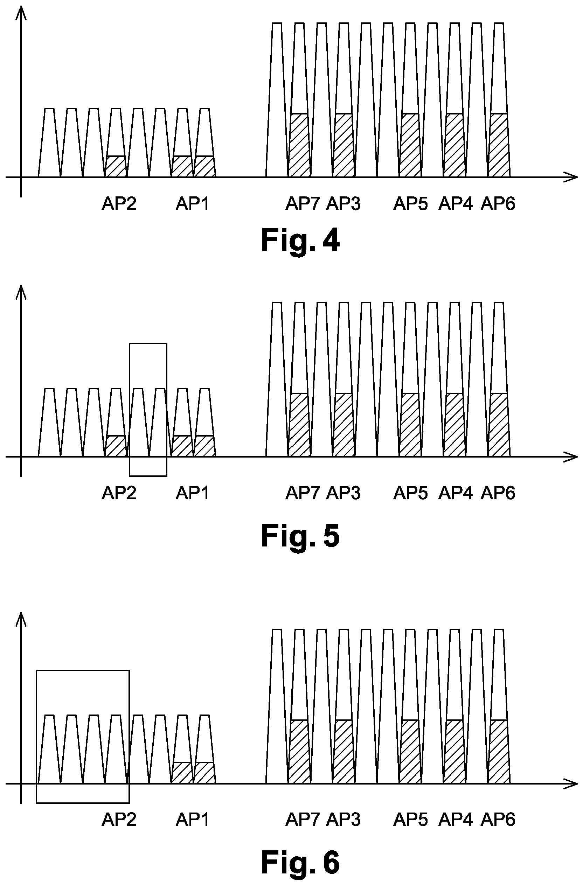

Une mise en oeuvre particulière d'un procédé selon l'invention est décrite ci-après et illustrée par les figures 4-7.

Un point d'accès optimise sa sélection de canal en se constituant une base de données de l'occupation de l'ensemble des canaux disponibles. Sur la figure 4, les canaux de la bande de transmission sont représentés par des cônes et les parties pleines représentent les pourcentages d'occupation des canaux.

S'il existe assez de canaux libres donc non occupés par des voisins AP1-AP7 pour ses besoins de bande passante (quel que soit le mode de transmission 20MHz, 40, 80, 80+80, 160MHz), le point d'accès AP se place sur les canaux libres. Par exemple et selon l'illustration de la figure 5, le point d'accès AP a besoin de 40MHz de bande, il se place sur les 40MHz disponibles et entourés par un rectangle sur la figure.

S'il n'existe pas assez de canaux libres, le point d'accès AP se place en co-canal avec des points d'accès voisins comme illustré par la figure 6. Le point d'accès AP choisit en priorité ceux qui ne génèrent pas ou peu d'interférence, c'est-à-dire qui appartiennent à un BSS éloigné mais détecté dans la bande de signalisation. Cette information peut notamment être dérivée de l'information de localisation transmise dans la bande de signalisation, de la puissance de réception reçue et diffusée dans la bande de signalisation, de l'information de charge des APs diffusée dans la bande de signalisation, ou d'un scan spécifique dans le canal principal occupé par le point d'accès AP. Par exemple et selon l'illustration de la figure 6, le point d'accès AP a besoin de 80MHz de bande. Comme il n'y a pas 80MHz de bande contigüe disponible, le point d'accès AP se place selon une première mise en oeuvre en co-canal avec le point d'accès voisin AP2, les canaux concernés sont entourés par un rectangle sur la figure.

Une autre mise en oeuvre, est décrite ci-après. En reprenant l'exemple précédent du point d'accès AP qui a besoin de 80MHz de bande, il s'avère qu'il existe suffisamment de canaux libres pour les besoins du point d'accès mais que ces canaux sont disjoints. Les informations pertinentes relatives à l'occupation dont dispose le point d'accès AP indiquent que deux canaux adjacents représentant 40MHz sont libres, que trois canaux adjacents représentant 60MHz sont libres et que ces deux groupes sont séparés par un canal occupé par le point d'accès AP2.

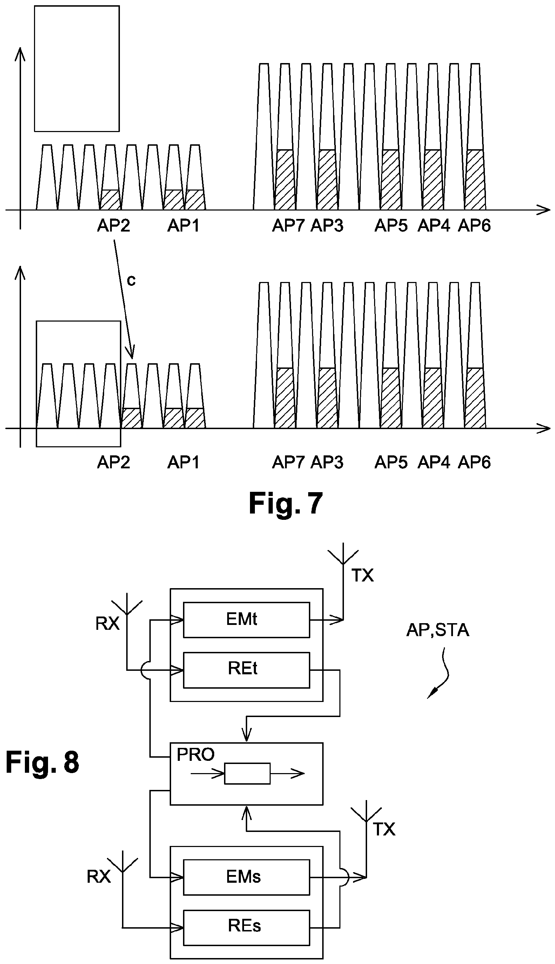

Selon cette mise en oeuvre, le point d'accès AP lance une procédure de négociation illustrée par la figure 7 avec le point d'accès AP2 pour que celui-ci change c de canal et libère le canal qu'il occupe et qui est adjacent au groupe de trois canaux libres.

La négociation s'effectue par un échange de trames entre les points d'accès dans la bande de signalisation. Le point d'accès AP émet une trame de requête de changement de canal (« channel switch request ») et le point d'accès AP2 répond par une trame de réponse à cette requête (« channel switch response »).

En cas d'acceptation par le point d'accès AP2, ce dernier change de canal et le point d'accès AP occupe le canal libéré et les trois canaux adjacents, les canaux concernés sont entourés par un rectangle sur la figure 7.

L'invention a été décrite dans le cas d'une mise en oeuvre avec un point d'accès. De manière similaire, le procédé peut être mis en oeuvre par une station, typiquement dans un fonctionnement « peer to peer » intervenant en particulier dans un réseau maillé (« mesh network»).

La figure 8 est un schéma d'un exemple de structure simplifiée d'un équipement WiFi AP, STA multi bandes apte à mettre en oeuvre un procédé de sélection de canal selon un objet de l'invention. L'équipement WiFi est en particulier destiné à un réseau d'accès WiFi multi bandes comprenant plusieurs points d'accès multi bandes, une première bande étant dite de transmission, une deuxième bande étant dite de signalisation et de couverture plus large que la bande de transmission.

L'équipement WiFi AP, STA comprend :
- des moyens d'émission/réception EMt, REt pour émettre et recevoir des trames de données via un canal de la bande de transmission. Ces moyens sont une chaîne d'émission EMt et une chaine de réception REt classiques dont les caractéristiques fréquentielles sont adaptées pour la bande de transmission.
- des moyens d'émission/réception EMs, REs adaptés pour émettre et recevoir dans la bande de signalisation des trames de signalisation comportant des informations pertinentes reliées à l'occupation de la bande de transmission respectivement par le point d'accès et des points d'accès voisins. Ces moyens sont une chaîne d'émission EMs et une chaine de réception REs classiques dont les caractéristiques fréquentielles sont adaptées pour la bande de signalisation et pour émettre et recevoir les informations pertinentes.

Les moyens d'émission/réception EMt, REt, EMs, REs respectivement des bandes de transmission et de signalisation étant adaptés conjointement pour émettre et recevoir de manière simultanée. Typiquement, ces moyens d'émission/réception comprennent des filtres de réjection pour atténuer très fortement les signaux d'une bande par rapport à l'autre bande.

Ces moyens d'émission/réception sont typiquement couplés à un moyen de calcul PRO, par exemple un microprocesseur ou un DSP (Digital Signal Processeur), micro programmé pour mettre en trame les informations pertinentes à émettre, pour exploiter les informations pertinentes reçues des points d'accès voisins. Le moyen de calcul peut être en outre micro programmé pour lancer une procédure de négociation avec un point d'accès voisin pour que celui-ci change de canal et libère un canal adjacent à un canal libre.

## Revendications

1. Procédé (1) de sélection de canal destiné à un équipement WiFi multi bandes d'un réseau WiFi avec partage de canaux multi bandes entre équipements du réseau WiFi, une première bande étant dite de transmission, une deuxième bande étant dite de signalisation et présentant de meilleures caractéristiques de portée que la bande de transmission, **caractérisé en ce qu'**il comprend :
- une étape (EM) d'émission dans la bande de signalisation (BS) de premières informations pertinentes reliées à l'occupation de la bande de transmission par l'équipement et
- une étape (REC) de réception dans la bande de signalisation (BS) de deuxièmes informations pertinentes reliées à l'occupation de la bande de transmission par des équipements voisins qui se déroulent de manière concomitante à toute étape d'émission dans la bande de transmission.

2. Procédé (1) de sélection de canal destiné à un équipement multi bandes d'un réseau WiFi avec partage des canaux multi bandes entre équipements du réseau WiFi selon la revendication 1, dans lequel l'émission des premières informations pertinentes est effectuée selon un mode de diffusion.

3. Procédé (1) de sélection de canal destiné à un équipement multi bandes d'un réseau WiFi avec partage des canaux multi bandes entre équipements du réseau WiFi selon la revendication 1 ou 2, dans lequel les informations pertinentes sont encapsulées dans une trame comportant des champs renseignés en vue d'un transfert de session d'un premier canal à un deuxième canal du réseau WiFi multi bandes.

4. Procédé (1) de sélection de canal destiné à un équipement multi bandes d'un réseau WiFi avec partage des canaux multi bandes entre équipements du réseau WiFi selon l'une des revendications 1 à 3, comprenant en outre :
- une étape d'échange de trames dans la bande de signalisation entre l'équipement et un équipement voisin, l'équipement émettant une trame de requête de changement de canal et attendant en réponse une trame émanant de l'équipement voisin indiquant l'acceptation ou le rejet de changement de canal.

5. Equipement WiFi (AP) multi bandes destiné à un réseau WiFi multi bandes comprenant plusieurs équipements multi bandes, une première bande étant dite de transmission, une deuxième bande étant dite de signalisation et présentant de meilleures caractéristiques de portée que la bande de transmission, apte à mettre en oeuvre un procédé de sélection de canal, **caractérisé en ce qu'**il comprend :
- des moyens d'émission/réception pour émettre et recevoir des trames de données via un canal multi bande de la bande de transmission,
- des moyens d'émission/réception adaptés pour émettre et recevoir dans la bande de signalisation des trames de signalisation comportant des informations pertinentes reliées à l'occupation de la bande de transmission respectivement par l'équipement et des équipement voisins,
les moyens d'émission/réception respectivement des bandes de transmission et de signalisation étant adaptés conjointement pour émettre et recevoir de manière simultanée.

6. Equipement WiFi (AP) multi bandes selon la revendication précédente tel que :
- les moyens d'émission/réception dans la bande de signalisation comprennent des moyens de diffusion.

7. Programme d'ordinateur sur un support d'informations, ledit programme comportant des instructions de programme adaptées à la mise en oeuvre d'un procédé de sélection de canal mis en oeuvre par un équipement multi bandes d'un réseau WiFi avec partage de canaux multi bandes entre équipements du réseau WiFi, selon l'une quelconque des revendications 1 à 4, lorsque ledit programme est chargé et exécuté dans un équipement destiné à mettre en oeuvre le procédé de sélection de canal.

8. Support d'informations comportant des instructions de programme adaptées à la mise en oeuvre d'un procédé de sélection de canal mis en oeuvre par un équipement multi bandes d'un réseau WiFi avec partage de canaux multi bandes entre équipements du réseau WiFi, selon l'une quelconque des revendications 1 à 4, lorsque ledit programme est chargé et exécuté dans un équipement destiné à mettre en oeuvre le procédé de sélection de canal.

## Patentansprüche

1. Verfahren (1) zur Kanalauswahl, das für eine Multiband-WiFi-Einrichtung eines WiFi-Netzes mit gemeinsamer Nutzung von Multiband-Kanälen durch Einrichtungen des WiFi-Netzes bestimmt ist, wobei ein erstes Band Übertragungsband genannt wird, wobei ein zweites Band Signalisierungsband genannt wird und bessere Reichweiteneigenschaften als das Übertragungsband aufweist, **dadurch gekennzeichnet, dass** es Folgendes beinhaltet:
- einen Schritt (EM) des Sendens, in dem Signalisierungsband (BS), erster relevanter Informationen, welche die Belegung des Übertragungsbandes durch die Einrichtung betreffen, und
- einen Schritt (REC) des Empfangs, in dem Signalisierungsband (BS), zweiter relevanter Informationen, welche die Belegung des Übertragungsbandes durch benachbarte Einrichtungen betreffen, welche gleichzeitig mit jedem Schritt des Sendens in dem Übertragungsband ablaufen.

2. Verfahren (1) zur Kanalauswahl, das für eine Multiband-Einrichtung eines WiFi-Netzes mit gemeinsamer Nutzung von Multiband-Kanälen durch Einrichtungen des WiFi-Netzes bestimmt ist, nach Anspruch 1, wobei das Senden der ersten relevanten Informationen in einem Rundsendemodus durchgeführt wird.

3. Verfahren (1) zur Kanalauswahl, das für eine Multiband-Einrichtung eines WiFi-Netzes mit gemeinsamer Nutzung von Multiband-Kanälen durch Einrichtungen des WiFi-Netzes bestimmt ist, nach Anspruch 1 oder 2, wobei die relevanten Informationen in einem Rahmen eingekapselt sind, der Felder aufweist, die Informationen hinsichtlich einer Sitzungsübergabe von einem ersten Kanal an einen zweiten Kanal des Multiband-WiFi-Netzes beinhalten.

4. Verfahren (1) zur Kanalauswahl, das für eine Multiband-Einrichtung eines WiFi-Netzes mit gemeinsamer Nutzung von Multiband-Kanälen durch Einrichtungen des WiFi-Netzes bestimmt ist, nach einem der Ansprüche 1 bis 3, welches außerdem Folgendes beinhaltet:
- einen Schritt des Austauschs von Rahmen in dem Signalisierungsband zwischen der Einrichtung und einer benachbarten Einrichtung, wobei die Einrichtung einen Kanalwechselanfrage-Rahmen sendet und als Antwort einen von der benachbarten Einrichtung kommenden Rahmen erwartet, der die Annahme oder die Ablehnung eines Kanalwechsels angibt.

5. Multiband-WiFi-Einrichtung (AP), die für ein Multiband-WiFi-Netz bestimmt ist, das mehrere Multiband-Einrichtungen aufweist, wobei ein erstes Band Übertragungsband genannt wird, wobei ein zweites Band Signalisierungsband genannt wird und bessere Reichweiteneigenschaften als das Übertragungsband aufweist, und die geeignet ist, ein Verfahren zur Kanalauswahl durchzuführen, **dadurch gekennzeichnet, dass** sie Folgendes aufweist:
- Sende-/Empfangsmittel zum Senden und Empfangen von Datenrahmen über einen Multiband-Kanal des Übertragungsbandes,
- Sende-/Empfangsmittel, die dafür eingerichtet sind, in dem Signalisierungsband Signalisierungsrahmen zu senden und zu empfangen, die relevante Informationen beinhalten, welche die Belegung des Übertragungsbandes durch die Einrichtung bzw. durch benachbarte Einrichtungen betreffen,
wobei die Sende-/Empfangsmittel des Übertragungsbandes bzw. des Signalisierungsbandes gemeinsam dafür eingerichtet sind, gleichzeitig zu senden und zu empfangen.

6. Multiband-WiFi-Einrichtung (AP) nach dem vorhergehenden Anspruch, wobei:
- die Sende-/Empfangsmittel in dem Signalisierungsband Rundsendemittel aufweisen.

7. Computerprogramm auf einem Informationsträger, wobei das Programm Programmanweisungen beinhaltet, die für die Durchführung eines Verfahrens zur Kanalauswahl, das von einer Multiband-Einrichtung eines WiFi-Netzes mit gemeinsamer Nutzung von Multiband-Kanälen durch Einrichtungen des WiFi-Netzes durchgeführt wird, nach einem der Ansprüche 1 bis 4 ausgelegt sind, wenn das Programm in eine Einrichtung, die für die Durchführung des Verfahrens zur Kanalauswahl bestimmt ist, geladen und in dieser ausgeführt wird.

8. Informationsträger, welcher Programmanweisungen beinhaltet, die für die Durchführung eines Verfahrens zur Kanalauswahl, das von einer Multiband-Einrichtung eines WiFi-Netzes mit gemeinsamer Nutzung von Multiband-Kanälen durch Einrichtungen des WiFi-Netzes durchgeführt wird, nach einem der Ansprüche 1 bis 4 ausgelegt sind, wenn das Programm in eine Einrichtung, die für die Durchführung des Verfahrens zur Kanalauswahl bestimmt ist, geladen und in dieser ausgeführt wird.

## Claims

1. Channel selection method (1) intended for a multiband Wi-Fi device of a Wi-Fi network with multiband channel sharing between devices of the Wi-Fi network, a first band being called the transmission band, a second band being called the signalling band and having better range characteristics than the transmission band, **characterized in that** it comprises:
- a step (EM) of transmission, in the signalling band (BS), of first relevant information linked to the occupancy of the transmission band by the device, and
- a step (REC) of reception, in the signalling band (BS), of second relevant information linked to the occupancy of the transmission band by neighbouring devices that takes place concomitantly with any transmission step in the transmission band.

2. Channel selection method (1) intended for a multiband device of a Wi-Fi network with multiband channel sharing between devices of the Wi-Fi network according to Claim 1, in which the first relevant information is transmitted in accordance with a broadcast mode.

3. Channel selection method (1) intended for a multiband device of a Wi-Fi network with multiband channel sharing between devices of the Wi-Fi network according to Claim 1 or 2, in which the relevant information is encapsulated in a frame having fields containing information for a session transfer from a first channel to a second channel of the multiband Wi-Fi network.

4. Channel selection method (1) intended for a multiband device of a Wi-Fi network with multiband channel sharing between devices of the Wi-Fi network according to one of Claims 1 to 3, moreover comprising:
- a step of frame interchange in the signalling band between the device and a neighbouring device, the device transmitting a frame requesting a change of channel and awaiting, in response, a frame from the neighbouring device indicating acceptance or rejection of the change of channel.

5. Multiband Wi-Fi device (AP) intended for a multiband Wi-Fi network comprising multiple multiband devices, a first band being called the transmission band, a second band being called the signalling band and having better range characteristics than the transmission band, capable of implementing a channel selection method, **characterized in that** it comprises:
- transmission/reception means for transmitting and receiving data frames via a multiband channel of the transmission band,
- transmission/reception means suitable for transmitting and receiving, in the signalling band, signalling frames having relevant information linked to the occupancy of the transmission band by the device and neighbouring devices, respectively,
the transmission/reception means of the transmission and signalling bands, respectively, being collectively suitable for transmitting and receiving simultaneously.

6. Multiband Wi-Fi device (AP) according to the preceding claim, such that:
- the transmission/reception means in the signalling band comprise broadcast means.

7. Computer program on an information storage medium, said program having program instructions suitable for implementing a channel selection method implemented by a multiband device of a Wi-Fi network with multiband channel sharing between devices of the Wi-Fi network, according to any one of Claims 1 to 4, when said program is loaded and executed in a device intended for implementing the channel selection method.

8. Information storage medium having program instructions suitable for implementing a channel selection method implemented by a multiband device of a Wi-Fi network with multiband channel sharing between devices of the Wi-Fi network, according to any one of Claims 1 to 4, when said program is loaded and executed in a device intended for implementing the channel selection method.
